# EUROPÄISCHE PATENTSCHRIFT

(11) **EP 0 342 547 B1**
(45) Veröffentlichungstag und Bekanntmachung des Hinweises auf die Patenterteilung: **19.10.1994**
(21) Anmeldenummer: 89108604.3
(22) Anmeldetag: 12.05.1989
(51) Int. Cl.: H04J 3/14

(54) **Verfahren zum Erzeugen eines Alarmunterdrückungssignals (AIS)**
Method for generating an alarm suppression signal
Procédé pour la génération d'un signal pour supprimer un alarme

(30) Priorität: 18.05.1988 DE 3816974
(43) Veröffentlichungstag der Anmeldung: 23.11.1989
(73) Patentinhaber: SIEMENS AKTIENGESELLSCHAFT, 80333 München (DE)
(72) Erfinder: Thoma, Wolfgang, Dr.-Ing., D-8000 München 71 (DE)

(56) Entgegenhaltungen:
- EP-A- 0 133 278
- DE-B- 2 556 079
- GB-A- 1 401 261
- IBM TECHNICAL DISCLOSURE BULLETIN, Band 26, Nr. 2, Juli 1983, Seiten 803-804, New York, US; D.W. ANDREWS et al.: "Recovery from transmission medium failures in a ring"

## Beschreibung

Die Erfindung bezieht sich auf ein Verfahren zur Alarmierung bei mehreren in einer Strecke eines Netzersatz-Schaltsystems in Reihe eingefügten Digitalsignalverteilers, die mit regionalen Zentralen oder einer Netzmanagement-Zentrale verbunden sind, bei dem durch eine Störung des übertragenen Digitalsignals von zwischen den Digitalsignalsverteilern angeordneten Geräten ein aus einer Dauer-Eins-Impulsfolge bestehendes Alarmsignal ausgesendet wird.

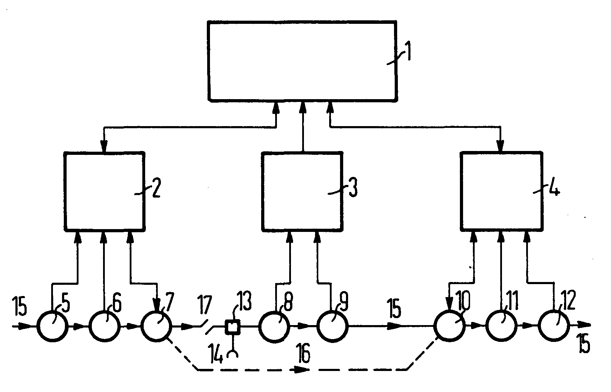

In der Zeitschrift "telcom report", 10 (1987) H2, Seiten 102 bis 107 ist in Bild 8 ein zentral gesteuertes Netzersatz-Schaltsystem beschrieben.

Das in der Figur wiedergegebene Netzersatz-Schaltsystem enthält eine Netzmanagement-Zentrale 1, regionale Zentralen 2 bis 4, Digitalsignalverteiler 5 bis 12, ein Leitungsendgerät 13, eine Strecke 15 und eine Ersatzstrecke 16. Die Digitalsignalverteiler 5 bis 12 werden auch als Schaltstationen oder Cross-Connect-Einrichtungen bezeichnet.

Zwischen den Digitalsignalverteilern 5-12 befinden sich Streckenabschnitte mit beispielsweise Regeneratoren und Leitungsendgeräten, die in der Figur bis auf das Leitungsendgerät 13 nicht dargestellt sind. Tritt unmittelbar vor dem Leitungsendgerät 13 eine Unterbrechung 17 auf, dann gibt das Leitungsendgerät 13 an seinem Alarmausgang 14 einen dringenden A-Alarm ab und speist in die Strecke 15 in Übertragungsrichtung ein genormtes AIS-Signal in Form eines Dauer-Eins-Signals ein. Alle nachfolgenden Geräte wissen dann, daß eines der vorangegangenen Geräte bereits einen A-Alarm ausgelöst und damit eine Reparatur veranlaßt hat.

In dem zentral gesteuerten Netzersatz-Schaltsystem sind die Zentralen 1 bis 4 lediglich mit den Digitalsignalverteilern 5 bis 12, aber nicht mit den dazwischenliegenden Geräten, wie beispielsweise dem erwähnten Leitungsendgerät 13, verbunden.Den regionalen Zentralen 2 bis 4 werden nicht nur erkannte AIS-Signale, sondern auch unmittelbar vor den Digitalsignalverteilern 5 bis 12 auftretende Unterbrechungen und sonstige Mängel am Digitalsignal gemeldet. Von dem erwähnten Leitungsendgerät 13 aus erhalten die Digitalsignalverteiler 8 bis 12 über Neueinspeisungen das gleiche genormte AIS-Signal. Die regionalen Zentralen 3 und 4 können jetzt nicht unterscheiden, ob lediglich die Unterbrechung 17 vorliegt, oder ob zwischen den Digitalsignalverteilern 8 und 9, 9 und 10, 10 und 11 und 11 und 12 etwa weitere Unterbrechungen oder andere Mängel vorliegen. Sie können daher auch nicht beurteilen, zwischen welchen Digitalsignalverteilern optimal eine Ersatzstrecke einzuschalten wäre.

Ein Digitalsignalverteiler ist aus der europäischen Patentanmeldung EP 0 186 141 A2 bekannt.

Die genormten AIS-Signale werden entweder allein oder in einem Zeitschlitz eines Pulsrahmens eines Digitalsignals auf die Strecke gegeben. In dem CCITT-Empfehlungsentwurf G. 70Z, Seite 21 ist im synchronen Transportmodul STM-1, einem Pulsrahmen einer synchronen Hierarchie, in Pfadkopfteilen VC-4 POH, VC-31 POH und VC-32 POH ein Zeitschlitz bzw. ein Byte C2 hierfür vorgesehen.

Aus der europäischen Patentanmeldung 0 133 278 ist ein Verfahren und eine Anordnung zur Überwachung von Digital-Richtfunkstrecken bekannt. Bei Ausfall der Verbindung, der in einer Zwischenstelle festgestellt wird, werden alle Informationsbits in einem neu gebildeten Pulsrahmen auf den logischen Wert 1 gesetzt und dann verwürfelt. Hierdurch erhalten die folgenden Stationen scheinbar korrekte Signale, so daß kein weiterer Alarm ausgelöst wird.

Aufgabe der Erfindung ist es, in einem derartigen Netzersatz-Schaltsystem unter Einsparung von Rechnerkapazität Ersatzstrecken schneller und optimaler bereitzustellen.

Ausgehend von dem eingangs angegebenen Verfahren wird diese Aufgabe erfindungsgemäß dadurch gelöst, daß bei Empfang eines Alarmsignals oder eines fehlerhaften Digitalsignals durch einen der Digitalsignalverteiler eine Alarmmeldung an dessen zugehörige regionale Zentrale oder die Netzmanagement-Zentrale gesendet wird und daß von dem Digitalsignalverteiler über eine abgehende Strecke ein modifiziertes Alarmsignal ausgesendet wird, bei dem die Dauer-Eins-Impulsfolge durch äquidistant eingefügte einzelne Nullen unterbrochen wird, deren Häufigkeit kleiner 10⁻³ ist, und daß das modifizierte Alarmsignal auf einer ankommenden Strecke erkannt wird und anschließend weiter verarbeitet werden kann.

Bei einer Variante wird die Aufgabe dadurch gelöst, daß bei Empfang eines Alarmsignals oder eines fehlerhaften Digitalsignals durch einen der Digitalsignalverteiler eine Alarmmeldung an dessen zugehörige regionale Zentrale oder die Netzmanagement-Zentrale gesendet wird und daß über die Strecke ein modifiziertes Alarmsignal ausgesendet wird, das aus dem in einen Zeitschlitz eines in die abgehende Strecke einzuspeisenden Pulsrahmens eingefügten Alarmsignals, und aus einem Zusatzsignal besteht, das in einen anderen Zeitschlitz des Pulsrahmens eingefügt wird, und daß das auf einer ankommenden Strecke erkannt wird und anschließend weiter verarbeitet werden kann.

Von dem bekannten und genormten AIS-Signal in Form einer Dauer-Eins-Impulsfolge unterscheidet sich dieses modifizierte AIS-Signal also durch die eingefügten Nullen. Da deren Häufigkeit kleiner 10⁻³ ist, wird das modifizierte AIS-Signal auch als genormtes AIS-Signal erkannt, da in diesem eine gewisse Häufigkeit von Nullen ignoriert wird.

Bei einer Variante der Erfindung wird die Modifikation in Form eines Zusatzsignals zu einer Dauer-Eins-Impulsfolge gebildet.

Ausgestaltungen des erfindungsgemäßen Verfahrens sind den Unteransprüchen zu entnehmen.

Wenn in der Figur der Digitalsignalverteiler 8 entweder von dem davorliegenden Leitungsendgerät 13 ein genormtes AIS-Signal empfängt, oder wenn er eine hinter dem Leitungsendgerät 13 liegende Unterbrechung registriert, speist der Digitalsignalverteiler 8 kein genormtes AIS-Signal, sondern ein erfindungsgemäß modifiziertes AIS-Signal in die Strecke 15 ein. Alle zwischen Digitalsignalverteilern 8 und 9, 9 und 10, 10 und 11, 11 und 12 liegenden Geräte registrieren dies als normales AIS-Signal. Die Digitalsignalverteiler 9, 10, 11 und 12 erkennen es aber als modifiziertes AIS-Signal, lassen es durch und geben selbst keine entsprechende Meldung mehr an die regionalen Zentralen 3 und 4. Die Netzmanagement-Zentrale 1 veranlaßt nun die Schaltung der Ersatzstrecke 16, die bei einer Unterbrechung 17 in diesem Netzwerk optimal ist.

In Ausgestaltung der Erfindung kann der Digitalsignalverteiler 8 dann, wenn seine Verbindung zur regionalen Zentrale 3 gestört ist, anstelle jeder zweiten Null in dem von ihm in die Strecke 13 eingespeisten modifizierten AIS-Signals seine Adresse einsetzen. Der Digitalsignalverteiler 9 sieht sich dann veranlaßt, die vom Digitalsignalverteiler 8 unterbliebene Meldung selbst an die regionale Zentrale 3 vorzunehmen.

Das modifizierte AIS-Signal kann wie das genormte sowohl allein als auch in einem Zeitschlitz eines Pulsrahmens übertragen werden. Die Kennung kann bei einer Variante als Zusatzsignal in einem zweiten Zeitschlitz übertragen werden.

## Patentansprüche

1. Verfahren zur Alarmierung in einem Netzersatz-Schaltsystem mit mehreren in einer Strecke (15) in Reihe eingefügten Digitalsignalverteilern (5 bis 12), die mit regionalen Zentralen (2 bis 4) oder einer Netzmanagement-Zentrale (1) verbunden sind, bei dem durch eine Störung des übertragenen Digitalsignals von zwischen den Digitalsignalverteilern (5 bis 12) angeordneten Geräten (13) ein aus einer Dauer-Eins-Impulsfolge bestehendes Alarmsignal (AIS) ausgesendet wird,
**dadurch gekennzeichnet**,
daß bei Empfang eines Alarmsignals (AIS) oder eines fehlerhaften Digitalsignals durch einen der Digitalsignalverteiler (5 bis 12) eine Alarmmeldung an dessen zugehörige regionale Zentrale (2 bis 4) oder die Netzmanagement-Zentrale (1) gesendet wird und von dem Digitalsignalverteiler (5 bis 12) über eine abgehende Strecke ein modifiziertes Alarmsignal (AIS*) ausgesendet wird, bei dem die Dauer-Eins-Impulsfolge durch äquidistant eingefügte einzelne Nullen unterbrochen wird, deren Häufigkeit kleiner 10⁻³ ist, und
daß das modifizierte Alarmsignal (AIS*) auf einer ankommenden Strecke erkannt wird und anschließend weiter verarbeitet werden kann.

2. Verfahren nach Anspruch 1,
**dadurch gekennzeichnet**,
daß das modifizierte Alarmsignal (AIS*) fortlaufend in einen Zeitschlitz eines in eine abgehende Strecke einzuspeisenden Pulsrahmen eingefügt wird.

3. Verfahren zur Alarmierung in einem Netzersatz-Schaltsystem mit mehreren in eine Strecke (15) in Reihe eingefügten Digitalsignalverteilern (5 bis 12), die mit regionalen Zentralen (2 bis 4) oder einer Netzmanagement-Zentrale (1) verbunden sind, bei dem durch eine Störung des übertragenen Digitalsignals von zwischen den Digitalsignalverteilern (5 bis 12) angeordneten Geräten (13) ein aus einer Dauer-Eins-Impulsfolge bestehendes Alarmsignal (AIS) ausgesendet wird,
**dadurch gekennzeichnet**,
daß bei Empfang eines Alarmsignals (AIS) oder eines fehlerhaften Digitalsignals durch einen der Digitalsignalverteiler (5 bis 12) eine Alarmmeldung an dessen zugehörige regionale Zentrale (2 bis 4) oder die Netzmanagement-Zentrale (1) gesendet wird und von dem Digitalsignalsverteiler (5 bis 12) über eine abgehende Strecke ein modifiziertes Alarmsignal (AIS*) ausgesendet wird, das aus einem in einen Zeitschlitz eines Pulsrahmens eingefügten Alarmsignal (AIS) und aus einem in einen anderen Zeitschlitz des Pulsrahmens eingefügten Zusatzsignal besteht, und daß das modifizierte Alarmsignal (AIS*) auf einer ankommenden Strecke erkannt wird und anschließend weiter verarbeitet werden kann.

4. Verfahren nach einem der vorhergehenden Ansprüche,
**dadurch gekennzeichnet**,
daß an die Stelle jeder zweiten Null eine Nachricht tritt.

5. Verfahren nach Anspruch 4,
**dadurch gekennzeichnet**,
daß die Nachricht die Adresse des aussendenden Digitalsignalverteilers ist.

6. Verfahren nach Anspruch 5,
**dadurch gekennzeichnet**,
daß der Empfang eines modifizierten Alarmsignals (AIS*) mit begleitender Adresse an eine regionale Zentrale (2 bis 4) oder an die Netzmanagement-Zentrale (1) gemeldet wird.

## Claims

1. Method of indicating an alarm in a network change-over switching system having a plurality of digital signal distributors (5 to 12) which are inserted in series in a path (15) and are connected to regional centres (2 to 4) or a network management centre (1), in which a disturbance of the transmitted digital signal of equipment (13) arranged between the digital signal distributors (5 to 12) causes the sending of an alarm indication signal (AIS) comprising an all-ones pulse sequence, characterized in that, upon reception of an alarm indication signal (AIS) or an errored digital signal by one of the digital signal distributors (5 to 12), an alarm message is sent to its associated regional centre (2 to 4) or the network management centre (1) and a modified alarm indication signal (AIS*), in which the all-ones pulse sequence is interrupted by equidistantly inserted individual zeros, the frequency of which is less than 10⁻³, is sent by the digital signal distributor (5 to 12) via an outgoing path, and in that the modified alarm indication signal (AIS*) is detected on an incoming path and can subsequently be further processed.

2. Method according to Claim 1, characterized in that the modified alarm indication signal (AIS*) is continuously inserted into a time slot of a pulse frame to be fed into an outgoing path.

3. Method of indicating an alarm in a network change-over switching system having a plurality of digital signal distributors (5 to 12) which are inserted in series in a path (15) and are connected to regional centres (2 to 4) or a network management centre (1), in which a disturbance of the transmitted digital signal of equipment (13) arranged between the digital signal distributors (5 to 12) causes the sending of an alarm indication signal (AIS) comprising an all-ones pulse sequence, characterized in that, upon reception of an alarm indication signal (AIS) or an errored digital signal by one of the digital signal distributors (5 to 12), an alarm message is sent to its associated regional centre (2 to 4) or the network management centre (1) and a modified alarm indication signal (AIS*), which comprises an alarm indication signal (AIS) inserted into a time slot of a pulse frame and an additional signal inserted into another time slot of the pulse frame, is sent by the digital signal distributor (5 to 12) via an outgoing path, and in that the modified alarm indication signal (AIS*) is detected on an incoming path and can subsequently be further processed.

4. Method according to one of the preceding claims, characterized in that every second zero is replaced by a message.

5. Method according to Claim 4, characterized in that the message is the address of the transmitting digital signal distributor.

6. Method accordiong to Claim 5, characterized in that the reception of a modified alarm indication signal (AIS*) with accompanying address is reported to a regional centre (2 to 4) or to the network management centre (1).

## Revendications

1. Procédé d'alerte dans un système de commutation de remplacement de réseau comportant plusieurs répartiteurs (5 à 12) de signaux numériques, qui sont insérés en série dans une voie (15) et sont reliés à des centraux (2 à 4) régionaux ou à un central (1) de gestion de réseau, dans lequel un signal (AIS) d'indication d'alarme constitué d'un train continu d'impulsions de un, est émis du fait d'une perturbation du signal numérique transmis d'appareils (13) disposés entre les répartiteurs (5 à 12) de signaux numériques,
caractérisé en ce que
à la réception d'un signal (AIS) d'indication d'alarme ou d'un signal numérique erroné, un message d'alarme est émis par l'un des répartiteurs (5 à 12) de signaux numériques à son central (2 à 4) régional de rattachement ou au central (1) de gestion de réseau et un signal (AIS*) d'indication d'alarme modifié est émis par le répartiteur (5 à 12) de signaux numériques par l'intermédiaire d'une voie de départ, le train continu d'impulsions de un étant interrompu par des zéros isolés et insérés à équidistance, dont la fréquence d'apparition est plus petite que 10⁻³, et
on identifie le signal (AIS*) d'indication d'alarme modifié sur une voie d'arrivée et on poursuit son traitement ensuite.

2. Procédé suivant la revendication 1,
caractérisé en ce que,
l'on insère en continu le signal (AIS*) d'indication d'alarme modifié, dans un créneau temporel d'une trame d'impulsions à introduire dans une voie de départ.

3. Procédé d'alerte dans un système de commutation de remplacement de réseau comportant plusieurs répartiteurs (5 à 12) de signaux numériques, qui sont insérés en série dans une voie (15) et sont reliés à des centraux (2 à 4) régionaux ou à un central (1) de gestion de réseau, dans lequel un signal (AIS) d'indication d'alarme constitué d'un train continu d'impulsions de un, est émis du fait d'une perturbation du signal numérique transmis d'appareils (13) disposés entre les répartiteurs (5 à 12) de signaux numériques,
caractérisé en ce que
à la réception d'un signal (AIS) d'indication d'alarme ou d'un signal numérique erroné, un message d'alarme est émis par l'un des répartiteurs (5 à 12) de signaux numériques à son central (2 à 4) régional de rattachement ou au central (1) de gestion de réseau, et un signal (AIS*) d'indication d'alarme modifié est émis par le répartiteur (5 à 12) de signaux numériques par l'intermédiaire d'une voie de départ, ce signal (AIS*) d'indication d'alarme modifié étant constitué d'un signal (AIS) d'indication d'alarme inséré dans un créneau temporel d'une trame d'impulsions et d'un signal supplémentaire inséré dans un autre créneau temporel de la trame d'impulsions, et l'on identifie le signal (AIS*) d'indication d'alarme modifié sur une voie d'arrivée et l'on poursuit son traitement ensuite.

4. Procédé suivant l'une des revendications précédentes,
caractérisé en ce que,
au lieu de chaque deuxième zéro, il apparaît un message.

5. Procédé suivant la revendication 4,
caractérisé en ce que
le message est l'adresse du répartiteur de signaux numériques émetteur.

6. Procédé suivant la revendication 5,
caractérisé en ce que
l'on signale la réception d'un signal (AIS*) d'indication d'alarme modifié, avec adresse d'accompagnement, à un central (2 à 4) régional ou au central (1) de gestion de réseau.
